(19) Europäisches Patentamt
European Patent Office
Office européen des brevets

(11) **EP 4 197 417 A1**

(12) **EUROPÄISCHE PATENTANMELDUNG**

(43) Veröffentlichungstag:
**21.06.2023 Patentblatt 2023/25**

(21) Anmeldenummer: **21214318.4**

(22) Anmeldetag: **14.12.2021**

(51) Internationale Patentklassifikation (IPC):
*A47L 13/20* (2006.01)   *D06M 16/00* (2006.01)
*A47L 13/17* (2006.01)   *D06M 23/08* (2006.01)
*D06M 23/12* (2006.01)   *B32B 5/26* (2006.01)

(52) Gemeinsame Patentklassifikation (CPC):
**D06M 23/12; A47L 13/17; B32B 5/26; D06M 16/00; D06M 23/08**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **VERMOP Salmon GmbH**
**82205 Gilching (DE)**

(72) Erfinder:
• **Röll, Detlef**
 **87772 Pfaffenhausen (DE)**
• **Auer, Robert**
 **86391 Stadtbergen (DE)**

(74) Vertreter: **Hoffmann Eitle**
**Patent- und Rechtsanwälte PartmbB**
**Arabellastraße 30**
**81925 München (DE)**

(54) **VERFAHREN ZUR HERSTELLUNG EINES REINIGUNGSTEXTILS SOWIE WISCHBEZUG**

(57)   Ein Verfahren zur Herstellung eines Reinigungstextils umfasst die Schritte:
(a) Bereitstellen von pulverförmigen Partikeln (14) mit aktiven Substanzen, vorzugsweise mikroverkapselten aktiven Substanzen;
(b) Bereitstellen mindestens einer flächigen Lage Vliesmaterial (10; 12);
(c) Verteilen einer vorbestimmten Menge an pulverförmigen Partikeln (14) auf einer der mindestens einen flächigen Lage Vliesmaterial (10); und
(d) Verbinden der pulverförmigen Partikel mit der mindestens einen Lage Vliesmaterial (10).

Fig. 1

EP 4 197 417 A1

**Beschreibung**

Gebiet der Erfindung

Die Erfindung betrifft ein Verfahren zur Herstellung eines Reinigungstextils, insbesondere eines Einweg-Wischbezugs sowie einen Wischbezug für einen Mophalter hergestellt nach dem Verfahren.

Hintergrund der Erfindung

Reinigungstextilien und insbesondere Wischbezüge werden für vielfältige Reinigungsaufgaben eingesetzt. Wischbezüge werden dabei häufig an Mophaltern verwendet und müssen dabei auf ein für eine bestimmte Reinigungsaufgabe zugrundeliegendes Reinigungs- und Desinfektionskonzept abgestimmt sein. Dabei werden je nach Anwendungsfall Einwegbezüge oder Mehrwegbezüge verwendet. Einwegbezüge sind dabei nur für einen einzigen Reinigungszyklus einsetzbar und werden bevorzugt in Sterilbereichen oder Reinraumbereichen eingesetzt. Dabei ist es üblich, Einwegbezüge, insbesondere für Anwendungen im Sterilbereich einzeln zu verpacken.

Bei der Anwendung werden der passende Reiniger sowie die notwendige Anwendungskonzentration manuell ausgewählt und die Dosierung durch entsprechende Verdünnung eines Reinigungskonzentrats manuell erzeugt. Sowohl die Auswahl des passenden Reinigers wie auch dessen Dosierung sind somit von der Sorgfalt des Anwenders abhängig. Dies birgt allerdings die Gefahr, dass gerade in den oben beschriebenen, sensiblen Reinigungsbereichen Anwendungsfehler gemacht werden und entweder die gewünschte Reinigung nicht vollständig erfolgt oder aber Reinigungssubstanzen auf den zu reinigenden Flächen verbleiben.

Darstellung der Erfindung

Der Erfindung liegt die Aufgabe zugrunde, ein Verfahren zur Herstellung eines Reinigungstextils sowie einen zugehörigen Wischbezug vorzuschlagen, welche die Verwendung der richtigen Reinigungschemie sowie die richtige Anwendungskonzentration beim Arbeiten eines Reinigungstextils sicherstellen.

Diese Aufgabe wird durch ein Verfahren zur Herstellung eines Reinigungstextils mit den Merkmalen des Anspruchs 1 sowie durch einen Wischbezug für einen Mophalter nach Anspruch 14 gelöst. Bevorzugte Ausführungsformen folgen aus den übrigen Ansprüchen.

Das erfindungsgemäße Verfahren zur Herstellung eines Reinigungstextils, insbesondere eines Einweg-Wischbezugs umfasst die Schritte:

(a) Bereitstellen von pulverförmigen Partikeln mit aktiven Substanzen, vorzugsweise mikroverkapselten aktiven Substanzen;

(b) Bereitstellen mindestens einer flächigen Lage Vliesmaterial;

(c) Verteilen einer vorbestimmten Menge an pulverförmigen Partikeln auf der flächigen Lage Vliesmaterials; und

(d) Verbinden der pulverförmigen Partikel mit der mindestens einen Lage Vliesmaterial.

Erfindungsgemäß wird somit ein Reinigungstextil und insbesondere ein Einweg-Wischbezug hergestellt, bei dem mindestens eine Lage Vliesmaterial eine Verbindung eingeht mit pulverförmigen Partikeln. Vorzugsweise werden dabei mikroverkapselte aktive Substanzen eingesetzt. Die aktiven Substanzen sind dabei zur Oberflächenreinigung und/oder Desinfektion von Oberflächen.

Bei einer Mikroverkapselung wird eine als Wirkstoff einzusetzende Substanz mithilfe eines Füllmaterials in eine Umhüllung eingebettet, sodass es zu einer Einschluss-Immobilisierung der aktiven Substanz kommt. Die Mikroverkapselung wird in verschiedenen Gebieten wie in der Chemie, Biotechnologie, Pharmazie, Lebensmitteltechnologie, Kosmetik, Elektronik und Umwelttechnik eingesetzt und ermöglicht, flüssige Stoffe durch das Einhüllen zu einem festen Weiterverarbeitungsprodukt zu machen. Die dabei hergestellten Mikrokapseln können verschiedene Funktionen erfüllen, insbesondere aber kann eine gewünschte und kontrollierte Freisetzung erzeugt werden, die erst am gewünschten Ort zur gewünschten Zeit und auch mit einer gewünschten Freisetzungsgeschwindigkeit erfolgt. Im vorliegenden Fall bei der Herstellung eines Reinigungstextils, werden aktive Substanzen vor allem zur Oberflächenreinigung und/oder zur Desinfektion von Oberflächen eingesetzt. Dabei können bei der Oberflächenreinigung vor allem mikroverkapselte aktive Substanzen zum Einsatz kommen, während zur Desinfektion vor allem pulverförmige aktive Substanzen eingesetzt werden, die nicht mikroverkapselt sind. Die mikroverkapselten aktiven Substanzen verbleiben im trockenen Zustand in dem mikroverkapselten Zustand und setzen bei Kontakt mit Wasser die aktiven Substanzen aus dem Umhüllungsmaterial frei.

Die Herstellung mikroverkapselter Wirkstoffe ist in der Technik bekannt. In der EP 1 359 213 B1 werden wässrige Tensidzubereitungen beschrieben, die zur Herstellung von Haarshampoos verwendet werden. In der WO 00/65020 A wird ein manuelles Geschirrspülmittel beschrieben, welches verkapselte Wirkstoffe in einer tensidischen Phase enthält.

Der Vorteil eines so hergestellten Reinigungstextils besteht darin, dass ein anwendungsspezifischer Wirkstoff mit korrekter Dosierung bereits im Reinigungstextil enthalten ist. Eine Reinigungskraft kann somit ein Reinigungstextil nur unter Zudosierung von Wasser einsetzen. Dies spart nicht nur die Vorbereitungszeit für das Herstellung einer richtigen Anwendungskonzentration, sondern vermeidet auch Anwendungsfehler. Die mikroverkapselte, aktive Substanz wird dabei zeitverzögert nach 30 bis 60 Sekunden aus dem Umhüllungsmaterial freigesetzt.

Nach einer bevorzugten Ausführungsform erfolgt im Schritt (d) das Verbinden der pulverförmigen Partikel mit der Lage Vliesmaterial durch Imprägnieren der Lage Vliesmaterial mittels Beaufschlagung mit Mikrowellen oder das Anlegen eines Wechselstromfelds. Unter dem Imprägnieren der Lage Vliesmaterial wird dabei verstanden, dass die pulverförmigen Partikel in die Poren des Vliesmaterials transportiert und darin fixiert werden. Sowohl die Beaufschlagung mit Mikrowellen als auch das Anlegen eines Wechselstromfelds erfolgen dabei über eine vorgegebene Zeitspanne und vorgegeben Leistung, deren optimaler Bereich sich mit zielgerichteten Versuchen problemlos auffinden lässt. Ein derartiges Verfahren ist in der EP 1 678 372 B1 beschrieben.

Dieses Verfahren stellt ein sehr einfach durchzuführendes Herstellverfahren dar und kann mit einer einzigen Lage Vliesmaterial durchgeführt werden, was Vorteile besitzt, da Einwegtextilien in Form eines Einweg-Wischbezugs für einen Mophalter, die nach dem erfindungsgemäßen Verfahren hergestellt werden können, für die Oberflächenreinigung oder Desinfektion für Flächen bis zu etwa 20 qm eingesetzt werden können. Da nach der Aktivierung der aktiven Substanzen, die nach der Aktivierung ihre reinigende Wirkung entfalten, ein Einweg-Wischbezug nicht mehr reaktiviert werden kann, ist dieser nach einmaligem Gebrauch zu entsorgen.

Vorzugsweise werden im Schritt (b) zwei Lagen Vliesmaterial bereitgestellt und nach dem Schritt (c) folgt der Schritt (c1) des Aufbringens einer Klebstoffschicht, vorzugsweise als flächiges Klebstoffweb, auf eine erste Lage Vliesmaterial mit den darauf verteilten pulverförmigen Partikeln. Im Schritt (c) wird die vorbestimmte Menge an pulverförmigen Partikeln auf derjenigen Seite der ersten Lage Vliesmaterial verteilt, auf der im Schritt (c1) die Klebstoffschicht aufgebracht wurde. In einem Schritt (c2) wird daraufhin die zweite Lage Vliesmaterial auf der mit der Klebstoffschicht versehenen Seite der ersten Lage Vliesmaterial angeordnet.

Dieses bevorzugte Verfahren verwendet somit zwei Lagen Vliesmaterial, zwischen denen eine Klebstoffschicht angeordnet ist. Die Klebstoffschicht wird dabei bevorzugt als flächiges Klebeweb zugeführt. Unter einem Klebeweb wird eine offenporige textile Fläche verstanden, die unter Druckbeaufschlagung und unter erhöhter Temperatur eine klebende Wirkung entfaltet.

Alternativ könnte auch anstelle eines flächigen Klebewebs eine Schicht an flüssigem Klebstoffmaterial aufgetragen werden und bereits vor dem Auftragen des Klebstoffmaterials eine vorbestimmte Menge an pulverförmigen Partikeln mit dem Klebstoffmaterial vermischt werden. Dies besitzt den Vorteil, dass sich das pulverförmige Material weitgehend homogen in der Klebstoffschicht verteilt ist, allerdings aber auch den Nachteil, dass die Klebstoffschicht so dünn aufgetragen werden muss, dass die pulverförmigen Partikel nicht vollständig in der Klebstoffschicht eingeschlossen sind, damit eine Freisetzung der pulverförmigen Partikel erfolgt, nachdem der Reinigungstextil mittels einer exakten Zudosierung von Wasser angefeuchtet wurde.

Durch das Aufbringen der pulverförmigen Partikel auf eine Vliesschicht lassen sich diese leicht fixieren und darüber hinaus auch durch die Anordnung zwischen zwei Lagen Vliesmaterial, die mithilfe der Klebstoffschicht miteinander verbunden sind, besser gegen äußere Umwelteinflüsse abschirmen als dies bei der Verwendung einer einzelnen Lage an Vliesmaterial mit auf einer Seite angeordneten pulverförmigen Partikeln der Fall wäre.

Diese Verfahren ist vorzugsweise dadurch gekennzeichnet, dass im Schritt (d) die beiden Lagen Vliesmaterial mit der dazwischen angeordneten Klebstoffschicht unter erhöhtem Druck und vorzugsweise unter erhöhter Temperatur miteinander verklebt werden. Auf diese Weise wird eine gute Haftung zwischen den beiden Lagen Vliesmaterial erzeugt und darüber hinaus das Eindringen von Klebstoff in die zwischen den Fasern des Vliesmaterials gebildeten Poren unterstützt. Auf diese Weise wird nicht nur die Bindung zwischen den beiden Lagen des so hergestellten Reinigungstextils verbessert, sondern auch ein gezieltes Eindringen der pulverförmigen Partikeln in das Vliesmaterial gefördert.

Alternativ kann bei dem erfindungsgemäßen Verfahren zur Herstellung eines Reinigungstextils unter Verwendung von zwei Lagen Vliesmaterial das Verfahren weiterhin nach dem Schritt (c2) den Schritt (c3) des Anordnens einer Folienschicht auf derjenigen Seite der zweiten Lage Vliesmaterial umfassen, welche der ersten Lage Vliesmaterial abgewandt ist, wobei im Schritt (d) die beiden Lagen Vliesmaterial mit der dazwischen vorgesehenen Klebstoffschicht sowie die Folienschicht unter erhöhtem Druck sowie unter erhöhter Temperatur zu einem folienkaschierten Reinigungstextil verbunden werden.

Im Unterschied zu der oben beschriebenen Herstellweise ist somit an einer Außenseite des mit diesem Verfahren hergestellten Reinigungstextils eine Folie aufkaschiert. Das Aufkaschieren der Folie erfolgt dabei unter erhöhter Temperatur, wobei die Anwendung einer erhöhten Temperatur auch in Bezug auf die Verbindung der beiden Lagen Vliesmaterial den Vorteil besitzt, dass sich unter erhöhter Temperatur die Viskosität des Klebstoffmaterials in der Klebstoffschicht vorteilhaft verändert und das Klebstoffmaterial leichter in die Poren der angrenzenden Lagen Vliesmaterial eindringen kann.

Nach einer bevorzugten Ausführungsform des erfindungsgemäßen Verfahrens werden im Schritt (b) zwei Lagen Vliesmaterial bereitgestellt, im Schritt (c) die vorbestimmte Menge an pulverförmigen Partikeln auf eine der Lagen Vliesmaterial aufgebracht, und im Schritt (d) die zwei Lagen Vliesmaterial mit den zwischen den beiden Lagen angeordneten pulverförmigen Partikeln durch Vernadeln miteinander verbunden.

Das Vernadeln als Technik zur Verbindung von zwei Lagen Vliesmaterial ist in der Technik bekannt und besitzt den Vorteil, dass durch die mechanisch wirkenden Kräfte beim Vernadeln die pulverförmigen Partikel in die beiden Lagen Vliesmaterial eingedrückt werden. Beim Vernadeln der zwei Lagen Vliesmaterial wird keine Klebstoffschicht benötigt.

Vorzugsweise wird als Vliesmaterial ein Nadelvlies aus Polyester oder aus Polyester und Viskose für das erfindungsgemäße Verfahren verwendet. Diese Vliesmaterialen haben sich als besonders geeignet erwiesen, um Einweg-Wischbezüge herzustellen und um die pulverförmigen Partikel mit mikroverkapselten aktiven Substanzen aufzunehmen.

Alternativ ist es nach einer bevorzugten Ausgestaltung des erfindungsgemäßen Verfahrens aber auch möglich, das Vliesmaterial als Mehrkomponenten-Vliesmaterial auszuwählen. Nach einer bevorzugten Ausgestaltung des erfindungsgemäßen Verfahrens besitzt das Vliesmaterial jeder Lage ein Flächengewicht zwischen 100 g/m$^2$ und 150 g/m$^2$. Dieses Flächengewicht verteilt sich auf die Anzahl an einzelnen Vlieslagen.

Sowohl die Auswahl des Vliesmaterials als auch des Flächengewichts besitzen Einfluss auf die Wasseraufnahme des Vliesmaterials, die wiederum bestimmt, welche Menge an aktiver Substanz freigesetzt werden kann und welche Fläche somit mit dem mithilfe des erfindungsgemäßen Verfahrens hergestellten Reinigungstextil gereinigt oder desinfiziert werden kann. Weiterhin definiert das Flächengewicht auch die Porosität des Vliesmaterials und damit dessen Verhalten, pulverförmige Partikel mit definiertem Durchmesser aufnehmen zu können.

Nach einer bevorzugten Ausführungsform des erfindungsgemäßen Verfahrens liegt die Masse an im Schritt (a) einzubringenden pulverförmigen Partikeln im folgenden Bereich:

$$0,005 \cdot g \cdot WA/100 \leq SK \leq 0,008 \cdot g \cdot WA/100,$$

und bevorzugt wird die Masse nach der folgenden Gleichung berechnet:

$$SK = 0,007 \cdot g \cdot WA/100,$$

wobei SK die Masse an pulverförmigen Partikeln in Gramm bezogen auf die Fläche an Vliesmaterial in m$^2$ darstellt, WA die maximale Wasseraufnahme des Reinigungstextils in Prozent darstellt; und g das Gesamtgewicht des Reinigungstextils in Gramm pro m$^2$ darstellt.

Dieser Bereich hat sich in Versuchen als besonders geeignet erwiesen. Unterschreitet man den unteren Wert des bevorzugten Bereichs, so wird die mögliche Flächenleistung des mit dem Verfahren hergestellten Reinigungstextils aufgrund einer zu geringen Menge an Reinigungschemie nicht ausgeschöpft, wohingegen beim Überschreiten der oberen Bereichsgrenze an Masse an einzubringenden pulverförmigen Partikeln die aktiven Substanzen nicht vollständig zum Einsatz kommen und zum Teil nach dem Gebrauch in dem zu entsorgenden Einwegbezug verbleiben, ohne dass diese eingesetzt wurden.

Vorzugsweise ist das erfindungsgemäße Verfahren dadurch gekennzeichnet, dass die pulverförmigen Partikel im Wesentlichen kugelförmig sind und einen Durchmesser zwischen 500 μm und 800 μm besitzen und besonders bevorzugt einen Durchmesser zwischen 600 μm und 800 μm besitzen. Dieser Durchmesserbereich an pulverförmigen Partikeln hat sich als besonders geeignet erwiesen, um in das Vliesmaterial des Reinigungstextils eingebracht zu werden.

Vorzugsweise umfasst das erfindungsgemäße Verfahren weiterhin den Schritt (e) des Vorsehens einer Farbmarkierung am Reinigungstextil entsprechend der enthaltenen aktiven Substanz oder aktiven Substanzen. Durch das Vorsehen einer Farbmarkierung kann das Reinigungstextil für den Benutzer leichter in Bezug auf die gewünschte Anwendung identifiziert werden, beispielsweise indem eine bestimmte Farbmarkierung für die Oberflächenreinigung und eine andere Farbmarkierung für die Desinfektion für Oberflächen steht.

Nach einer bevorzugten Ausführungsform der Erfindung umfasst das Verfahren weiterhin den Schritt (f) des Verpackens mehrerer Reinigungstextilien in einer im Wesentlichen luftundurchlässigen Umhüllung, vorzugsweise in einer Folienumhüllung. Das Vorsehen einer Folienumhüllung besitzt den Vorteil, dass keine Feuchtigkeit eindringen kann, welche die mikroverkapselten aktiven Substanzen aktivieren und damit ein Reinigungstextil bereits vor dessen Einsatz unbrauchbar machen könnte.

Allen Ausführungsformen liegt die Grundidee zugrunde, die Reinigungssubstanzen vorzugsweise zu verkapseln und die mikroverkapselten Substanzen in ein Vlies einzuarbeiten, während Desinfektionssubstanzen bevorzugt in Pulverform eingesetzt werden. Durch eine Zudosierung von Wasser werden die pulverförmigen Partikel mit den aktiven Substanzen aktiviert und entfalten somit ihre reinigende und/oder desinfizierende Wirkung. Das somit benetzte Reinigungstextil kann für die zeitnahe Oberflächenreinigung oder Desinfektion eingesetzt werden. Der Vorgang ist allerdings nicht mehr reversibel und das Reinigungstextil ist nach einmaligem Gebrauch zu entsorgen.

Die pulverförmigen Partikel haben eine Standzeit von etwa einem Jahr und sollten kühl und trocken gelagert werden. Bei einer Temperatur von etwas mehr als 40°C kann es zudem zu einer Verklebung der Oberfläche kommen. Feuchtigkeit aktiviert die mikroverkapselten aktiven Substanzen, indem die umgebende Hülle aufgelöst wird, sodass die aktiven Substanzen freigesetzt werden und sich mit Wasser verbinden können, was zu einer Einschränkung für den Folgeprozess führt.

Obwohl in dem Vorangehenden besonders die Eignung des Reinigungstextils zur Oberflächenreinigung und/oder Desinfektion von Oberflächen betont wurde, können die aktiven Substanzen auch der Wischpflege dienen, beispielsweise bei der Pflege von Echtholz-Parkettböden.

## Kurze Beschreibung der Figuren

Nachfolgend werden einige Ausführungen der Erfindung beispielhaft anhand der Figuren beschrieben, in denen:

Fig. 1 eine erste Ausführungsform des erfindungsgemäßen Verfahrens zeigt;

Fig. 2 eine zweite Ausführungsform des erfindungsgemäßen Verfahrens zeigt;

Fig. 3 eine dritte Ausführungsform des erfindungsgemäßen Verfahrens zeigt; und

Fig. 4 eine vierte Ausführungsform des erfindungsgemäßen Verfahrens zeigt.

## Wege zur Ausführung der Erfindung

In den nachfolgenden Figuren werden dieselben Elemente jeweils mit denselben Referenzziffern bezeichnet.

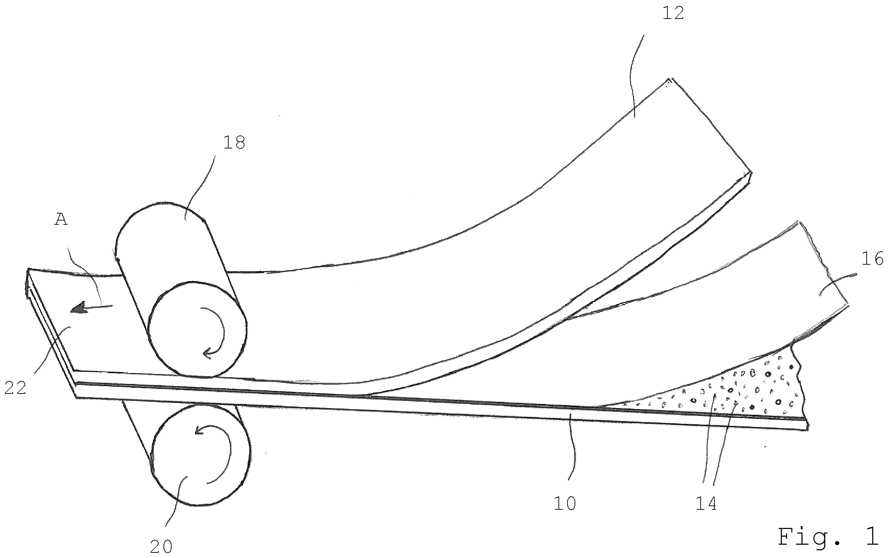

In Fig. 1 ist eine erste Ausführungsform des erfindungsgemäßen Verfahrens zur Herstellung eines Reinigungstextils 22 dargestellt. Dabei werden eine erste Lage Vliesmaterial 10 sowie eine zweite Lage Vliesmaterial 12 miteinander verbunden, um das Grundmaterial des Reinigungstextils zu bilden. Dazu werden pulverförmige Partikel 14 bereitgestellt, die entweder mikroverkapselte aktive Substanzen beinhalten zur Oberflächenreinigung und/oder zur Oberflächenpflege, und/oder pulverförmige Partikel zur Desinfektion beinhalten. Die pulverförmigen Partikel 14 sind dabei bevorzugt als Mikrokügelchen ausgebildet und werden im Falle einer Mikroverkapselung nach einem üblichen Standardverfahren verkapselt. Die Mikropartikel haben bevorzugt einen Durchmesser zwischen 500 und 800 $\mu$m, jedoch sind auch größere oder kleinere Partikelgrößen möglich.

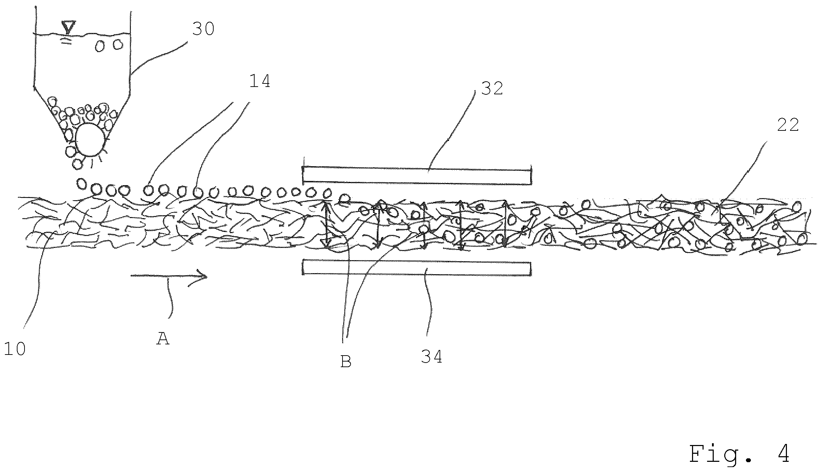

Die pulverförmigen Partikel 14 werden möglichst homogen verteilt auf die erste Lage Vliesmaterial 10 aufgebracht. Dazu kommt ein herkömmliches Streuaggregat zur Anwendung, das in Fig. 4 schematisch dargestellt ist. Anschließend wird eine Klebstoffschicht 16 zugeführt und auf die erste Lage Vliesmaterial 10 mit den darauf verteilten pulverförmigen Partikeln 14 gelegt. Die Klebstoffschicht wird dabei bevorzugt in Form eines Klebewebs eingesetzt. Unter einem Klebeweb wird eine offenporige textile Fläche verstanden, die unter Druckbeaufschlagung und unter erhöhter Temperatur eine klebende Wirkung entfaltet

Die erste Lage Vliesmaterial 10 mit den pulverförmigen Partikeln 14 wird in Kontakt gebracht mit dem Klebeweb 16 und die zweite Lage Vliesmaterial 12 wird zugeführt und auf derjenigen Seite der Klebstoffschicht 16 angeordnet, die der ersten Lage Vliesmaterial 10 abgewandt ist. Das so gebildete Vliesmaterial mit den beiden Lagen Vliesmaterial 10, 12, den dazwischen angeordneten pulverförmigen Partikeln 14 und der dazwischen angeordneten Klebstoffschicht 16 wird anschließend in den Spalt zwischen zwei gegenläufig rotierenden Druckwalzen 18, 20 geführt, in dem die beiden Lagen Vliesmaterial 10, 12 miteinander verklebt werden. Das kombinierte Vliesmaterial, das in Pfeilrichtung A den Spalt zwischen den Druckwalzen 18, 20 verlässt, ist das Reinigungstextil 22, das nachgeschaltet weiter auf einen speziellen Anwendungsfall hin konfektioniert werden kann, indem beispielsweise noch zusätzliche Fertigungsschritte folgen, wie das Aufbringen von Einschubtaschen für die Klappflügel eines Mophalters im Falle eines Wischbezugs. Die Druckwalzen 18, 20 können zusätzlich beheizt sein, um im Fall eines Klebewebs die Klebewirkung zu verbessern.

Als Vlies wird bevorzugt ein Nadelvlies aus Polyester verwendet, dessen Flächengewicht bei etwa 100 g/m$^2$ bis 150 g/m$^2$ liegt. Allerdings sind auch weitere Mischungen aus Polyester und Viskose und/oder Mehrkomponentenvlies für bestimmte Reinigungsaufgaben geeignet.

Nach dem Einarbeiten der pulverförmigen Partikel in das Vliesmaterial, sollte dieses zügig weiterverarbeitet werden, da das so hergestellte Reinigungstextil vor äußeren Einwirkungen, wie Temperatur und Luftfeuchtigkeit geschützt werden sollte. Hier bietet sich eine nachgeschaltete Verpackung mit luftdichter Folie an.

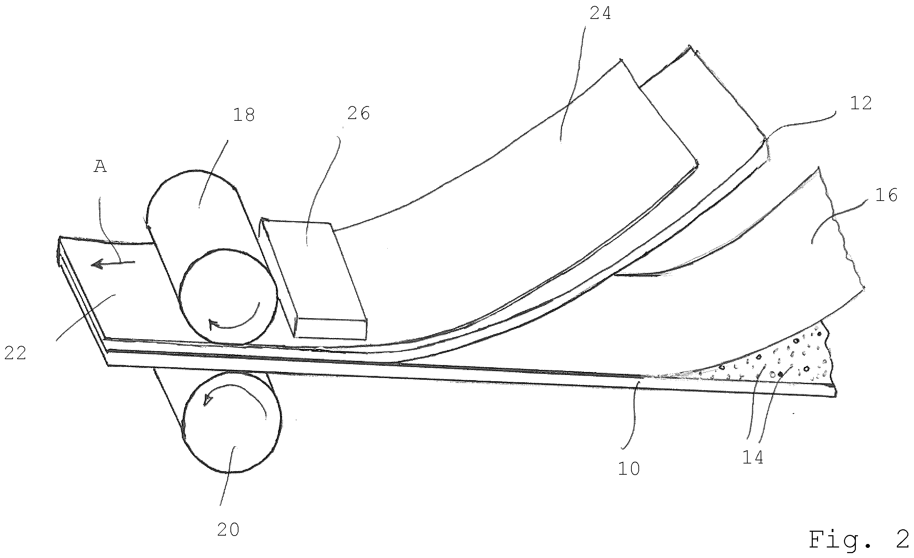

In Fig. 2 ist eine Variante dargestellt, bei der neben den in der Fig. 1 dargestellten Lagen und Schichten zusätzlich noch eine Folie 24 auf die zweite Lage Vliesmaterial 12 an der der ersten Lage Vliesmaterial 10 abgewandten Seite angeordnet wird und bereits vor dem Eintritt in den Spalt zwischen den Druckwalzen 18, 20 mithilfe einer Heizeinrichtung 26 fest mit der zweiten Lage Vliesmaterial 12 verbunden wird. Anschließend werden die erste Lage Vliesmaterial 10 mit den darauf fixierten pulverförmigen Partikeln 14 und dem darauf angeordneten Klebstoffweb 16 einerseits und die zweite Lage Vliesmaterial 12 mit der darauf kaschierten Folienschicht 24 gemeinsam in den Spalt zwischen den Druckwalzen 18, 20 geführt und unter Druck und gegebenenfalls unter erhöhter Temperatur miteinander verklebt. Das beim Verfahren nach Fig. 2 resultierende Reinigungstextil 22 unterscheidet sich somit von demjenigen nach Fig. 1 dahingehend, dass zusätzlich eine Folienkaschierung an einer Außenseite des Reinigungstextils 22 vorgesehen ist.

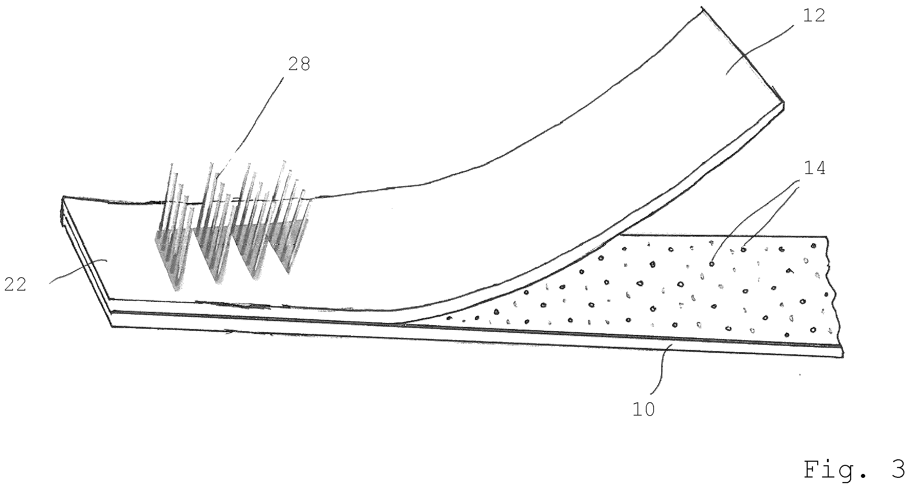

Die Ausführungsform nach Fig. 3 entspricht in Bezug auf die vorgesehenen Lagen derjenigen nach Fig. 1, unterscheidet sich aber dahingehend, dass anstelle einer Verbindung mithilfe von Druckwalzen eine Vernadelungsvorrichtung 28 vorgesehen ist, wie sie zur Herstellung von Nadelvlies gebräuchlich ist. In Fig. 3 sind dabei die Nadeln nur schematisch dargestellt. In gebräuchlichen Vernadelungsvorrichtungen verfügen die Nadeln über Widerhaken, die für das Verhaken der Fasern untereinander sorgen und einen festen Verbund zwischen den beiden Lagen Vliesmaterial herstellen.

Bei dem Verfahrensablauf nach Fig. 3 muss im Unterschied zu den Verfahrensvarianten nach Fig. 1 und 2 keine Klebstoffschicht verwendet werden, weil durch die Vernadelungstechnik die beiden Vlieslagen 10, 12 miteinander verbunden und verfestigt werden und es auf diese Weise ebenfalls zu einem hergestellten Reinigungstextil 22 mit miteinander verbundenen Lagen 10, 12 kommt.

In Fig. 4 ist eine alternative Ausführungsform des Verfahrens zur Herstellung eines Reinigungstextils dargestellt, bei dem nur eine einzelne Lage Vliesmaterial 10 zum Einsatz kommt. Das Vliesmaterial ist dabei im Schnitt schematisch dargestellt. Die Lage Vliesmaterial 10 wird in Pfeilrichtung A mit konstanter Geschwindigkeit gefördert, und eine Streuvorrichtung 30 verteilt die pulverförmigen Partikel 14 gleichmäßig auf der Oberfläche der Lage Vliesmaterial 10. Die Lage Vliesmaterial mit den darauf verteilten pulverförmigen Partikeln 14 wird anschließend zwischen zwei Elektroden 32, 34 hindurchgeführt, die ein Wechselstromfeld erzeugen, was dazu führt, dass die Partikel in Pfeilrichtung B zwischen den beiden Elektroden bewegt werden und auf diese Weise in das Vliesmaterial eindringen und darin fixiert werden.

Um den in Fig. 4 dargestellten Prozess zu erleichtern, wird vorzugsweise ein relativ grobfasriges Vlies mit geringer Verfestigung gewählt. Die maximale Dicke der Lage Vliesmaterial 10 kann dabei zwischen 20 und 30 mm liegen. Dies ist zwar für die Anwendung beispielsweise als Wischbezug zu voluminös, aber es kann dem in Fig. 4 schematisch dargestellten Prozess nachgelagert eine Verdichtung in einem Thermobondierschritt erfolgen. Die Porengröße des Vlieses wird in einem Bereich von 0,5 und 1,0 mm angestrebt, damit pulverförmige Partikel bis zu einer Größe von 800 $\mu$m in das Vlies eindringen können.

Nachdem nach einem der in den Figuren 1 bis 4 dargestellten Verfahren das Reinigungstextil 22 mit bereits darin eingebrachten aktiven Substanzen hergestellt wurde, muss bei der Anwendung des Reinigungstextils nur noch eine ausreichende Menge Wasser zugegeben werden, um die pulverförmigen Partikel mit den aktiven Substanzen durch das Wasser wirksam werden zu lassen. Um deutlich zu machen, welche aktive Substanz eingebunden wurde, kann bei allen Ausgestaltungen nach den in den schematischen Figuren 1 bis 4 dargestellten Verfahren in einem nachgeschalteten Schritt noch eine Farbkodierung verwendet werden, um für den Benutzer deutlich zu machen, um welche aktive Substanz es sich in einem daraus hergestellten Reinigungstextil handelt.

Das mit dem Verfahren nach der Erfindung hergestellte Produkt ist ein Reinigungstextil, das vorzugsweise ein Einweg-Wischbezug für einen Mophalter ist. Vorzugsweise umfasst dabei der Wischbezug Einschubtaschen für Klappflügel eines Mophalters.

## Patentansprüche

1. Verfahren zur Herstellung eines Reinigungstextils, insbesondere eines Einweg-Wischbezugs, umfassend die Schritte:

(a) Bereitstellen von pulverförmigen Partikeln (14) mit aktiven Substanzen, vorzugsweise mit mikroverkapselten aktiven Substanzen;
(b) Bereitstellen mindestens einer flächigen Lage Vliesmaterial (10; 12);
(c) Verteilen einer vorbestimmten Menge an pulverförmigen Partikeln (14) auf einer der mindestens einen flächigen Lage Vliesmaterial (10); und
(d) Verbinden der pulverförmigen Partikel mit der mindestens einen Lage Vliesmaterial (10) oder mit zwei Lagen Vliesmaterial.

**2.** Verfahren zur Herstellung eines Reinigungstextils nach Anspruch 1, **dadurch gekennzeichnet, dass** im Schritt (d) das Verbinden der pulverförmigen Artikel (14) mit der mindestens einen Lage Vliesmaterial (10) durch Imprägnieren der Lage Vliesmaterial (10) mittels Beaufschlagung mit Mikrowellen oder das Anlegen eines Wechselstromfelds erfolgt.

**3.** Verfahren zur Herstellung eines Reinigungstextils nach Anspruch 1, wobei

- im Schritt (b) zwei Lagen Vliesmaterial (10, 12) bereitgestellt werden,
- nach dem Schritt (c) der Schritt (c1) erfolgt: Aufbringen einer Klebstoffschicht (16), vorzugsweise als flächiges Klebstoffweb, auf eine erste Lage Vliesmaterial (10) mit den darauf verteilten pulverförmigen Partikeln (14);
- im Schritt (c) die vorbestimmte Menge an pulverförmigen Partikeln (14) auf derjenigen Seite der ersten Lage Vliesmaterial (10) verteilt wird, auf der im Schritt (c1) die Klebstoffschicht aufgebracht wird; und
- in einem Schritt (c2) die zweite Lage Vliesmaterial (12) auf der mit der Klebstoffschicht (16) versehenen Seite der ersten Lage Vliesmaterial (10) angeordnet wird.

**4.** Verfahren zur Herstellung eines Reinigungstextils nach Anspruch 3, **dadurch gekennzeichnet, dass** im Schritt (d) die beiden Lagen Vliesmaterial (10, 12) mit der dazwischen angeordneten Klebstoffschicht (16) unter erhöhtem Druck und vorzugsweise unter erhöhter Temperatur miteinander verklebt werden.

**5.** Verfahren zur Herstellung eines Reinigungstextils nach Anspruch 3, weiter umfassend nach dem Schritt (c2) den Schritt (c3): Anordnen einer Folienschicht (24) auf derjenigen Seite der zweiten Lage Vliesmaterial (12) welche der ersten Lage Vliesmaterial (10) abgewandt ist; wobei im Schritt (d) die beiden Lagen Vliesmaterial (10, 12) mit der dazwischen vorgesehenen Klebstoffschicht (16) sowie die Folienschicht (24) unter erhöhtem Druck und erhöhter Temperatur zu einem folienkaschierten Reinigungstextil verbunden werden.

**6.** Verfahren zur Herstellung eines Reinigungstextils nach Anspruch 1, wobei

- im Schritt (b) zwei Lagen Vliesmaterial (10, 12) bereitgestellt werden;
- im Schritt (c) die vorbestimmte Menge an pulverförmigen Partikeln (14) auf eine der Lagen Vliesmaterial (10) aufgebracht wird; und
- im Schritt (d) die zwei Lagen Vliesmaterial mit den zwischen den beiden Lagen Vliesmaterial (10, 12) angeordneten pulverförmigen Partikeln durch Vernadeln miteinander verbunden werden.

**7.** Verfahren nach einem der vorhergehenden Ansprüche, **dadurch gekennzeichnet, dass** das Vliesmaterial (10, 12) ein Nadelvlies aus Polyester oder aus Polyester und Viskose ist.

**8.** Verfahren nach einem der Ansprüche 1 bis 6, **dadurch gekennzeichnet, dass** das Vliesmaterial ein Mehrkomponentenvliesmaterial ist.

**9.** Verfahren nach einem der vorhergehenden Ansprüche, **dadurch gekennzeichnet, dass** das Reinigungstextil ein Flächengewicht zwischen $100 g/m^2$ und $150 g/m^2$ besitzt.

**10.** Verfahren nach einem der vorhergehenden Ansprüche, wobei die Masse an im Schritt (a) bereitgestellten pulverförmigen Partikeln in dem folgenden Bereich liegt:

$$0,005 \cdot g \cdot WA/100 \leq SK \leq 0,008 \cdot g \cdot WA/100,$$

und bevorzugt nach der folgenden Gleichung berechnet wird:

$$SK = 0,007 \cdot g \cdot WA/100,$$

wobei SK die Masse an pulverförmigen Partikeln (14) in Gramm bezogen auf die Fläche an Vliesmaterial in $m^2$ darstellt, WA die maximale Wasseraufnahme des Reinigungstextils in Prozent darstellt; und g das Gesamtgewicht des Reinigungstextils in Gramm pro $m^2$ darstellt.

**11.** Verfahren nach einem der vorhergehenden Ansprüche, **dadurch gekennzeichnet, dass** die pulverförmigen Partikel (14) mit mikroverkapselten aktiven Substanzen im Wesentlichen kugelförmig sind und einen Durchmesser zwischen 500 μm und 800 μm besitzen, bevorzugt einen Durchmesser zwischen 600 μm und 800 μm besitzen.

12. Verfahren nach einem der vorhergehenden Ansprüche, weiter umfassend den Schritt:
(e) Vorsehen einer Farbmarkierung am Reinigungstextil entsprechend der in dem Reinigungstextil enthaltenen aktiven Substanz oder aktiven Substanzen.

13. Verfahren nach einem der vorhergehenden Ansprüche, weiter umfassend den Schritt:
(f) Verpacken mehrerer Reinigungstextile in einer im Wesentlichen luftundurchlässigen Umhüllung, vorzugsweise in einer Folienumhüllung.

14. Wischbezug für einen Mophalter, umfassend ein Reinigungstextil hergestellt nach dem Verfahren nach einem der vorhergehenden Ansprüche.

15. Wischbezug nach Anspruch 14, weiter umfassend Einschubtaschen für die Klappflügel eines Mophalters.

Fig. 1

EP 4 197 417 A1

Fig. 2

Fig. 3

Fig. 4

Europäisches
Patentamt

European
Patent Office

Office européen
des brevets

# EUROPÄISCHER RECHERCHENBERICHT

Nummer der Anmeldung

EP 21 21 4318

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 8 173 857 B1 (YANANTON PATRICK [US]) 8. Mai 2012 (2012-05-08) * Spalte 3, Zeile 30 – Spalte 11, Zeile 12 * * Spalte 11, Zeile 55 – Spalte 12, Zeile 11 * * Spalte 12, Zeile 19 – Spalte 16, Zeile 54 * * Spalte 17, Zeilen 24-49 * * Spalte 18, Zeile 55 – Spalte 19, Absatz 54 * ----- | 1-15 | INV. A47L13/20 D06M16/00 A47L13/17 D06M23/08 D06M23/12 B32B5/26 |
| X | US 2002/168216 A1 (POLICICCHIO NICOLA JOHN [US] ET AL) 14. November 2002 (2002-11-14) * Absätze [0226], [0227], [0259], [0260], [0264], [0275], [0322], [0345], [0379] * * Abbildungen 1-3, 4a,4b * ----- | 1-5, 8-11,13 | |
| X | JP H08 308780 A (DAIKEN IKI KK) 26. November 1996 (1996-11-26) * Zusammenfassung * * Absätze [0001], [0007], [0012], [0018] – [0021] * ----- | 1,14 | RECHERCHIERTE SACHGEBIETE (IPC) A47L D06M B32B |
| X | WO 2006/129252 A2 (PROCTER & GAMBLE [US]; JORDAN IV GLENN THOMAS [US] ET AL.) 7. Dezember 2006 (2006-12-07) * Seite 22, Zeilen 21-27; Abbildungen 1-3 * ----- | 1-15 | |
| X | US 2012/124762 A1 (CALIGARIS MARK [US] ET AL) 24. Mai 2012 (2012-05-24) * Absatz [0018]; Abbildungen 1-3,10 * ----- | 1-14 | |
| X | KR 2009 0081479 A (JANGMI CO LTD [KR]) 29. Juli 2009 (2009-07-29) * Zusammenfassung * * Absatz [0017] * ----- | 14 | |

Der vorliegende Recherchenbericht wurde für alle Patentansprüche erstellt

| Recherchenort | Abschlußdatum der Recherche | Prüfer |
|---|---|---|
| Den Haag | 7. Juni 2022 | Barathe, Rainier |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

**EP 21 21 4318**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**07-06-2022**

| Im Recherchenbericht angeführtes Patentdokument | Datum der Veröffentlichung | Mitglied(er) der Patentfamilie | Datum der Veröffentlichung |
|---|---|---|---|
| US 8173857 B1 | 08-05-2012 | KEINE | |
| US 2002168216 A1 | 14-11-2002 | US 2002168216 A1 | 14-11-2002 |
| | | US 2004086320 A1 | 06-05-2004 |
| JP H08308780 A | 26-11-1996 | KEINE | |
| WO 2006129252 A2 | 07-12-2006 | CA 2609516 A1 | 07-12-2006 |
| | | EP 1916935 A2 | 07-05-2008 |
| | | JP 2008541919 A | 27-11-2008 |
| | | US 2006270586 A1 | 30-11-2006 |
| | | WO 2006129252 A2 | 07-12-2006 |
| US 2012124762 A1 | 24-05-2012 | US 2012124762 A1 | 24-05-2012 |
| | | US 2013007972 A1 | 10-01-2013 |
| KR 20090081479 A | 29-07-2009 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1359213 B1
- WO 0065020 A

- EP 1678372 B1